## Europäisches Patentamt
## European Patent Office
## Office européen des brevets

(19)

(11) Numéro de publication: **0 004 490**
**B1**

(12) **FASCICULE DE BREVET EUROPEEN**

(45) Date de publication du fascicule de brevet: **07.10.81**

(51) Int. Cl.³: **D 06 F 17/08,** F 16 H 5/70, D 06 F 37/34

(21) Numéro de dépôt: **79400124.8**

(22) Date de dépôt: **27.02.79**

(54) Mécanisme d'inversion de marche pour machine à laver, et machine équipée d'un tel mécanisme.

(30) Priorité: **23.03.78 FR 7808518**

(43) Date de publication de la demande:
**03.10.79 Bulletin 79/20**

(45) Mention de la délivrance du brevet:
**07.10.81 Bulletin 81/40**

(84) Etats Contractants Désignés:
**BE CH DE GB IT NL SE**

(56) Documents cités:
CH - A - 139 302
FR - A - 407 427
FR - A - 520 719
FR - A - 735 447
NL - C - 16 618
US - A - 1 358 295
US - A - 1 396 082
US - A - 1 414 430
US - A - 1 628 233
US - A - 1 632 091
US - A - 1 755 026
US - A - 2 709 727

(73) Titulaire: **SEB S.A. Société Anonyme française
F-21260 Selongey (FR)**

(72) Inventeur: **Schwob, Pierre
55 Avenue des Frères Lumière
F-69008 Lyon (FR)**

(74) Mandataire: **Bouju, André
Cabinet Bouju 38 avenue de la Grande Armée
F-75017 Paris (FR)**

Courier Press, Leamington Spa, England.

Mécanisme d'inversion de marche pour machine à laver, et machine équipée d'un tel mécanisme

La présente invention concerne un mécanisme d'inversion de marche, pour une machine à laver. Elle concerne également une machine à laver équipée d'un tel mécanisme.

L'invention s'applique notamment aux petites machines à laver le linge, à usage domestique, du genre décrit, par exemple, dans les brevets français n° 1 474 862 et n° 1 579 484. De telles machines à laver le linge comportent une cuve où se trouve un organe tournant, tel qu'une turbine de brassage, entraîné par le moteur électrique, pour assurer la circulation de l'eau nécessaire au lavage du linge.

L'expérience montre que la circulation de l'eau en rotation dans un seul sens tend à provoquer un entraînement en rotation du linge dans le même sens. Certaines pièces de linge, de chemiserie par exemple, tendent ainsi, sous l'influence de l'organe tournant, à s'enrouler et à se nouer sur elles-mêmes, formant des paquets compacts difficiles à déplacer, et pouvant même freiner ou bloquer l'organe tournant. En outre, l'efficacité et la rapidité du lavage se trouvent compromises par l'enroulement précité du linge en paquets compacts. Pour éviter ces inconvénients, on inverse périodiquement le sens de rotation de la turbine de brassage.

On connaît divers dispositifs d'inversion de marche, notamment pour des machines à moteur électrique comportant des organes électro-mécaniques, ou purement électriques. Dans le cas des machines à laver, appelées à fonctionner de manière prolongée en ambiance très humide, il est indiqué, pour des raisons de sécurité, de limiter au strict minimum les organes électriques, pour pouvoir en assurer économiquement une protection efficace.

Le brevet des Pays-Bas n° 16 618 décrit un mécanisme d'inversion de marche pour une machine à laver dans lequel un pignon d'entrée est constamment en prise avec deux couronnes montées folles sur un arbre de sortie. Chaque couronne coopère, au moyen de saillies, avec une bague coulissante d'embrayage respective solidaire en rotation de l'arbre de sortie, et chaque bague coulissante est mobile entre une position d'embrayage dans laquelle elle solidarise la couronne associée avec l'arbre de sortie et une position de débrayage dans laquelle elle est écartée de cette couronne, chaque bague coulissante étant commandée par une came d'inversion par l'intermédiaire de moyens de commande.

Ce système de commande des bagues manque de souplesse et conduit à des heurts dans le fonctionnement. Il est, d'autre part, lent et ne permet pas l'adaptation à une machine rapide à turbine de brassage, telle que celle décrite dans les brevets français mentionnés ci-dessus.

Le brevet américain 1 358 295 décrit un dispositif d'inversion de marche qui remédie partiellement à ces inconvénients. Dans ce dispositif, un manchon coulissant d'embrayage est mobile entre deux positions dans chacune desquelles l'un ou l'autre de deux pignons opposés est accouplé à l'arbre d'entrée. Le dispositif comprend encore deux leviers à axe commun. L'un est articulé au manchon, l'autre est mobile entre deux butées de façon telle que sa position moyenne est opposée à celle du premier levier. Un ressort de traction relie ces deux ressorts en des points éloignés de l'axe. En outre, une roue montée sur l'axe commun des leviers et entraînée par l'arbre de sortie porte un tenon coopérant avec le second levier pour faire passer ce dernier de l'une à l'autre de ses butées. Dès l'effet du ressort, le premier levier pivote en sens inverse, ce qui libère le pignon qui était en prise jusqu'alors, et enclenche le manchon avec l'autre pignon.

L'inconvénient de ce système est que l'inversion de marche n'est pas certaine, à moins que comme le prévoit le brevet US 1 358 295, un dispositif additionnel de sécurité ne prévienne ces incertitudes. En effet, le ressort forme un angle très ouvert avec l'axe du manchon, de sorte que son effet n'est transmis qu'en faible proportion au manchon, même quand le second levier est en butée. Si l'on rapprochait de l'axe commun l'extrémité du ressort associée au premier levier, cet angle serait rendu plus favorable, mais par contre, le bras de levier sur lequel agirait le ressort serait très faible.

Le but de l'invention est de remédier à ces inconvénients en réalisant un mécanisme d'inversion de marche opérant avec rapidité, douceur et fiabilité.

L'invention, telle qu'elle est caractérisée dans les revendications, résout le problème consistant à créer un mécanisme d'inversion fonctionnant de manière douce et rapide, et dans lequel les risques de mauvais fonctionnement conduisant au maintien prolongé de la rotation dans un seul sens sont fortement diminués.

Les avantages obtenus grâce à cette invention consistent essentiellement en ce qu'au cours d'un changement de position d'une bague, la cage correspondante pivote de manière à comprimer le ressort jusqu'à ce que le sens d'action du ressort s'inverse. Dès lors, le basculeur pousse brusquement la bague coulissante dans son autre position. Au cours du mouvement du basculeur, l'état de compression décroissant du ressort est compensé par son orientation de plus en plus favorable par rapport à l'axe du basculeur. Par ailleurs, aucun compromis n'est à faire entre le bras de levier d'action du ressort et sa direction d'action.

D'autres particularités et avantages de l'invention ressortiront encore de la description donnée ci-après d'un mode de réalisation présenté à titre d'exemple non limitatif, en référence aux dessins annexés, dans lesquels:

— la Figure 1 est une coupe schématique en élévation d'une machine à laver comportant un mécanisme d'inversion de marche conforme à l'invention,

— les Figures 2 et 3 sont des élévations agrandies de la partie supérieure de la machine de la figure 1, suivant II—II et III—III respectivement,

— la Figure 4 est une vue en bout du mécanisme d'inversion de la machine de la Figure 3, suivant IV—IV,

— la Figure 5 est une vue en perspective du mécanisme d'inversion de la machine de la Figure 3, séparé de son moteur d'entraînement, et prise sous un angle voisin de la vue de cette figure,

— la Figure 6 est une coupe générale agrandie du mécanisme d'inversion de la Figure 4, suivant VI—VI,

— la Figure 7 est une vue en bout agrandie avec arrachements de la Figure 6, suivant VII—VII, montrant la came d'arrêt automatique et la roue d'inversion, montées suivant un même axe sur le couvercle du boîtier du mécanisme,

— les Figures 8 et 10 sont des vues en plan de chaque face de la roue d'inversion de la Figure 6, suivant VIII—VIII et X—X,

— la Figure 9 est une coupe de la roue d'inversion des Figures 8 et 10, suivant IX—IX,

— la Figure 11 montre l'intérieur du boîtier du mécanisme d'inversion de la Figure 6, couvercle enlevé, suivant XI—XI,

— la Figure 12, analogue à la Figure 11, montre l'intérieur du boîtier du mécanisme, une fois enlevés les deux basculeurs associés chacun à une cage oscillante,

— la Figure 13 est une vue en perspective d'un basculeur du mécanisme d'embrayage de la Figure 11, avec sa cage oscillante associée,

— la Figure 14 est une vue partielle agrandie de la Figure 6, montrant l'arbre de sortie avec les deux couronnes dentées folles sur l'arbre, et leur dispositif d'embrayage à mouvements réciproques,

— la Figure 15 est une vue schématique éclatée en coupe de la couronne dentée de la partie droite de la Figure 14, avec sa bague d'embrayage associée et la douille cannelée clavetée sur l'arbre de sortie,

— les Figures 16 et 17 sont deux vues de l'interrupteur automatique du mécanisme de la Figure 6, suivant XVI—XVI, montrant l'interrupteur associé à la came d'arrêt, respectivement en position de marche et en position d'arrêt du moteur.

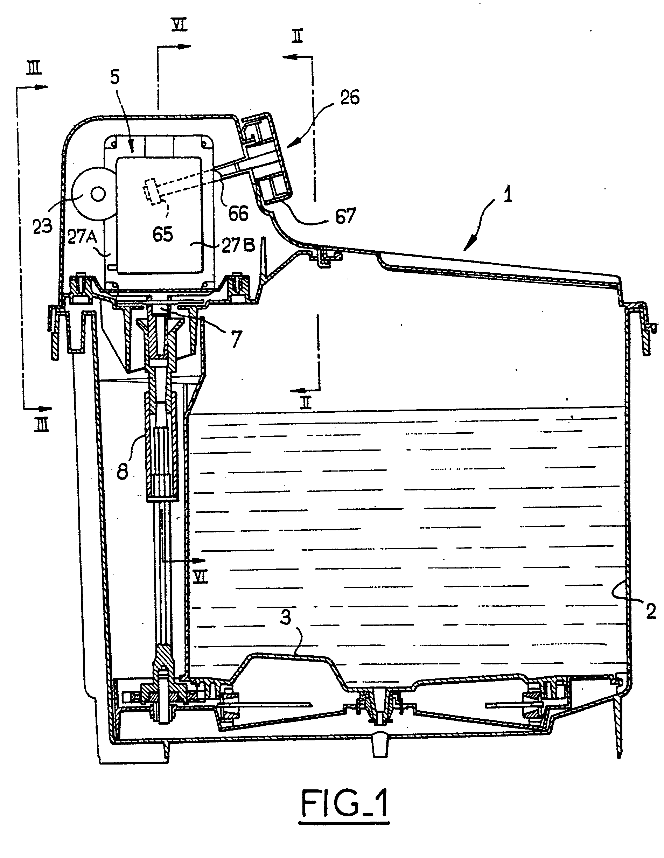

Dans le mode de réalisation schématique des Figures 1 à 3, la machine est, par exemple, une machine à laver le linge 1, pour usage domestique, du genre décrit dans les brevets français n° 1 474 862 et n° 1 579 484. La machine 1 comporte une cuve 2 où se trouve un organe tournant tel qu'une turbine de brassage 3, entraînée par un moteur électrique 4, pour assurer la circulation de l'eau nécessaire au lavage du linge (non représenté).

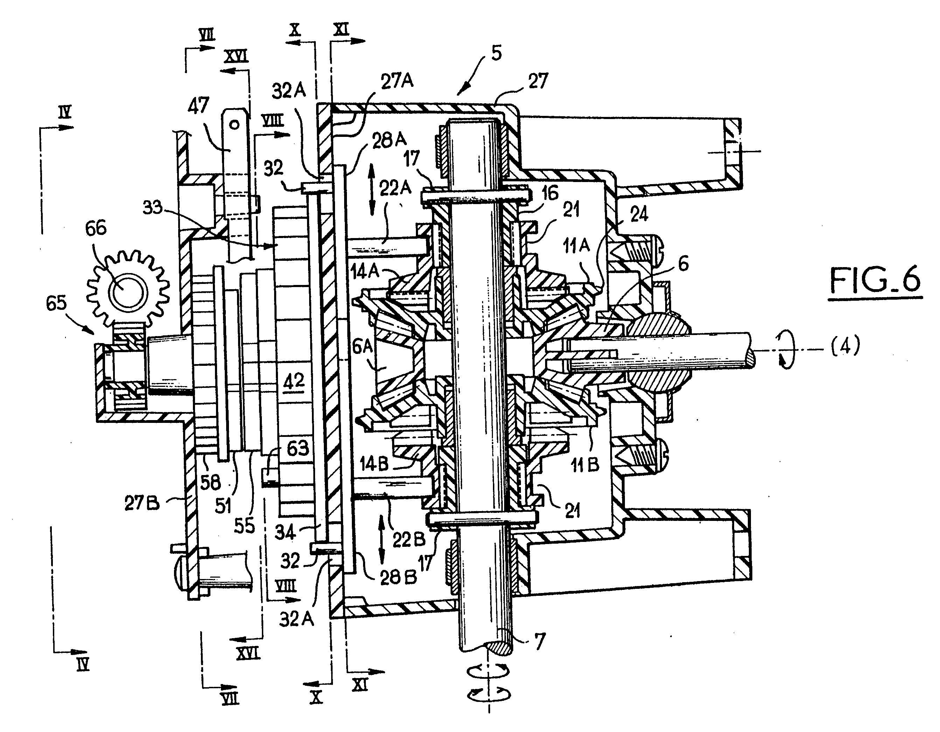

Pour assurer alternativement l'entraînement en rotation de la turbine de brassage 3, comme on l'explique plus loin, la machine 1 est équipée d'un mécanisme d'inversion de marche 5. Celui-ci comporte un pignon d'entrée 6 (Figures 6, 14, 15), entraîné par le moteur 4. Le mécanisme comporte également un arbre de sortie 7 pour entraîner la turbine de brassage 3, de préférence par l'intermédiaire d'un accouplement élastique 8 (Figure 1), tel que décrit, par exemple, dans le brevet français n° 2 116 809.

Conformément à l'invention (Figures 6, 14, 15), le mécanisme d'inversion 5 comporte deux couronnes dentées 11A, 11B, montées folles sur l'arbre de sortie 7, de part et d'autre du pignon d'entrée 6, et constamment en prise avec celui-ci. Les couronnes 11A, 11B, sont maintenues parallèles et écartées, par exemple au moyen de pignons d'écartement 6A. Des moyens d'inversion décrits plus loin sont prévus pour embrayer de manière sélective la couronne dentée 11A, ou la couronne 11B, sur l'arbre de sortie 7, pour inverser le sens de rotation de celui-ci pour un même sens de rotation du pignon d'entrée 6 entraîné par le moteur 4.

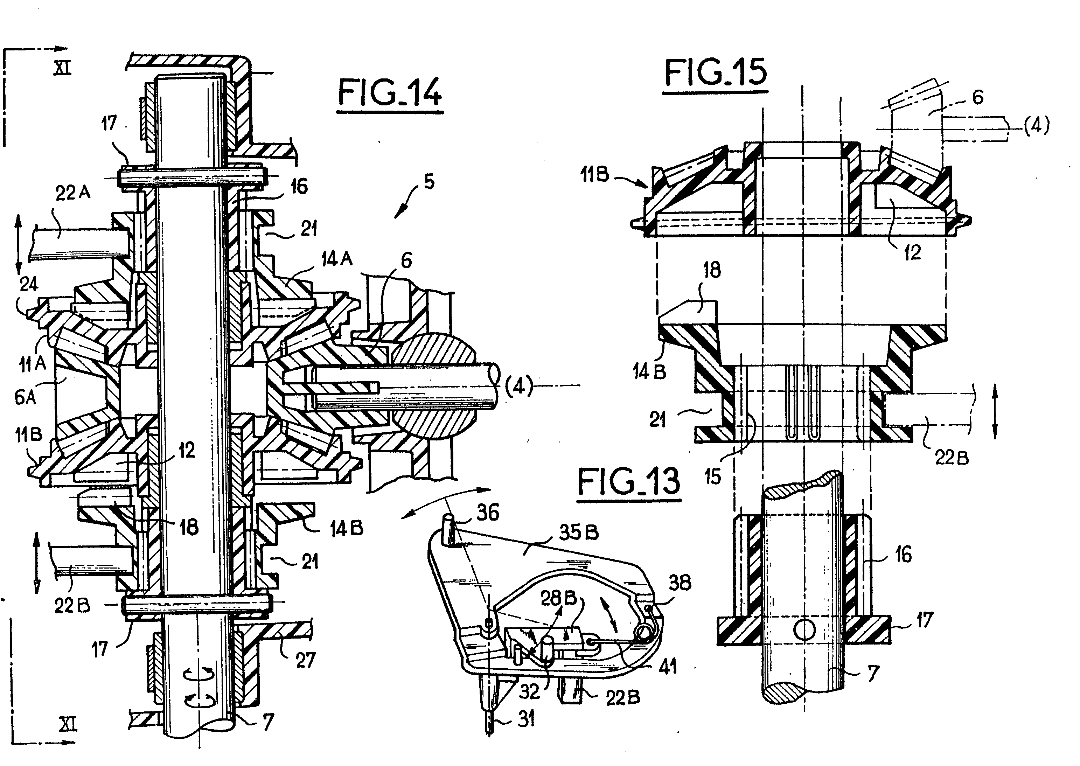

Chaque couronne dentée 11A, 11B, sur une face opposée au pignon d'entrée 6 (Figures 6, 14, 15), présente des saillies latérales 12, de préférence au nombre de 3, et disposées à 120° l'une de l'autre autour de l'arbre 7. A chaque couronne 11a, 11b, est associée une bague d'embrayage 14A, 14B, comportant un alésage cannelé 15 (Figure 15) monté à coulisse sur une partie cannelée 16 d'une douille 17, clavetée sur l'arbre de sortie 7. Chaque douille 17 constitue une butée pour la bague coulissante associée 14A ou 14B, en position de débrayage.

Chaque bague coulissante 14A, 14B, présente, en regard des saillies latérales 12 de la couronne dentée associée 11A, 11B, des saillies 18, analogues aux saillies 12 de la couronne, pour solidariser en rotation la couronne 11A ou 11B, et l'arbre de sortie 7 en position d'embrayage de la bague coulissante correspondante 14A, 14B, comme on l'explique plus loin. Une gorge annulaire périphérique 21 est prévue sur chaque bague coulissante 14A, 14B, pour recevoir une extrémité d'un doigt mobile de commande 22A, 22B, servant à faire coulisser la bague 14A, 14B, par rapport à l'arbre de sortie 7.

Les moyens d'inversion du mécanisme sont associés, de préférence, à des moyens de conjugaison décrits plus loin, pour assurer de manière réciproque les mouvements des deux doigts de commande 22A, 22B, parallèlement à l'axe de l'arbre de sortie 7, dans un sens ou dans l'autre (Figures 6, 14).

De préférence, les moyens de conjugaison des deux doigts de commande d'embrayage 22A, 22B, comportent des moyens pour réserver un temps mort entre le mouvement d'un doigt de commande tel que 22A dans le sens du débrayage de la couronne associée 21A, et le mouvement réciproque de l'autre doigt de commande 22B, assurant l'embrayage d'autre couronne 21B. A chaque inversion du sens de rotation de l'arbre de sortie 7, on assure ainsi un temps de liberté de l'arbre, ce qui permet de laisser en marche le moteur 4 d'une manière continue et de ménager le mécanisme, au profit de son endurance prolongée, comme on l'explique plus loin. Egalement, la liberté ainsi assurée à l'arbre de sortie évite un arrêt brusque et indésirable de l'organe tournant de brassage soumis à l'inertie de la masse d'eau et du linge en mouvement dans la cuve.

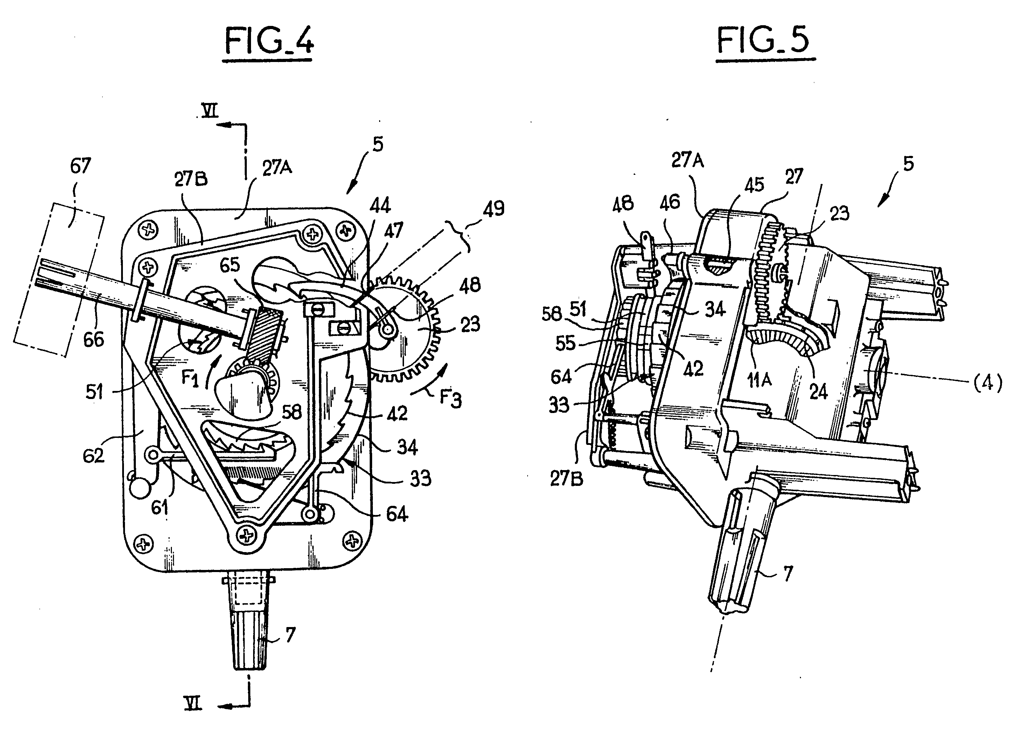

Le mécanisme comporte, en outre, des moyens de comptage associés aux moyens d'inversion, pour assurer automatiquement une inversion du sens de rotation de l'arbre de sortie 7 (Figures 1 à 6), au bout d'un nombre prédéterminé de tours du pignon d'entrée. Par exemple, les moyens de comptage comportent un pignon latéral de comptage 23, entraîné par un filetage 24 en saillie radiale sur une bordure périphérique de l'une des couronnes dentées, telle que 11A (Figures 4, 5, 7, 12) constamment en prise avec le pignon d'entrée 4 (Figures 6, 14).

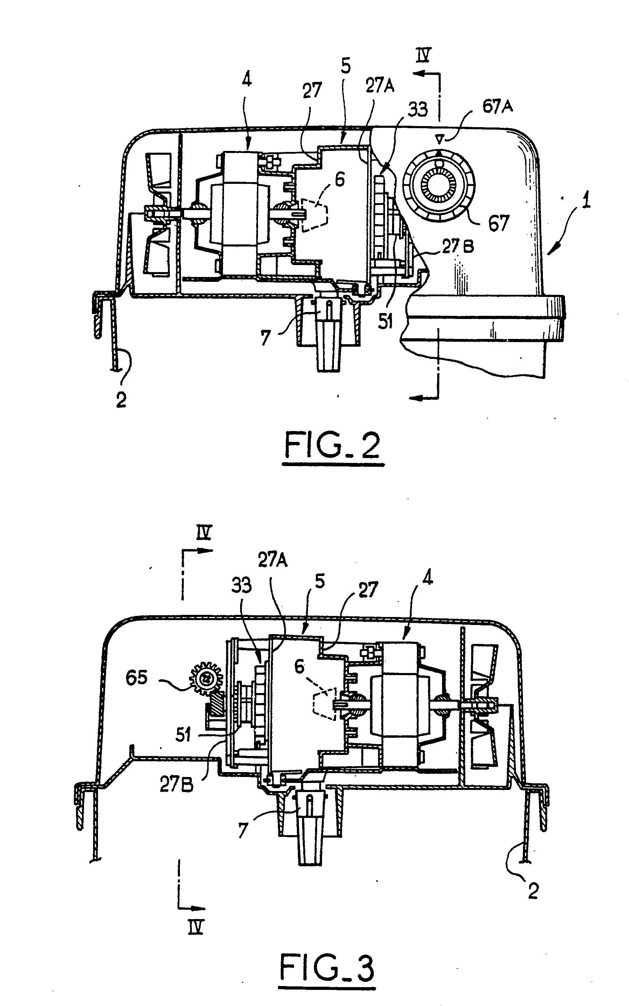

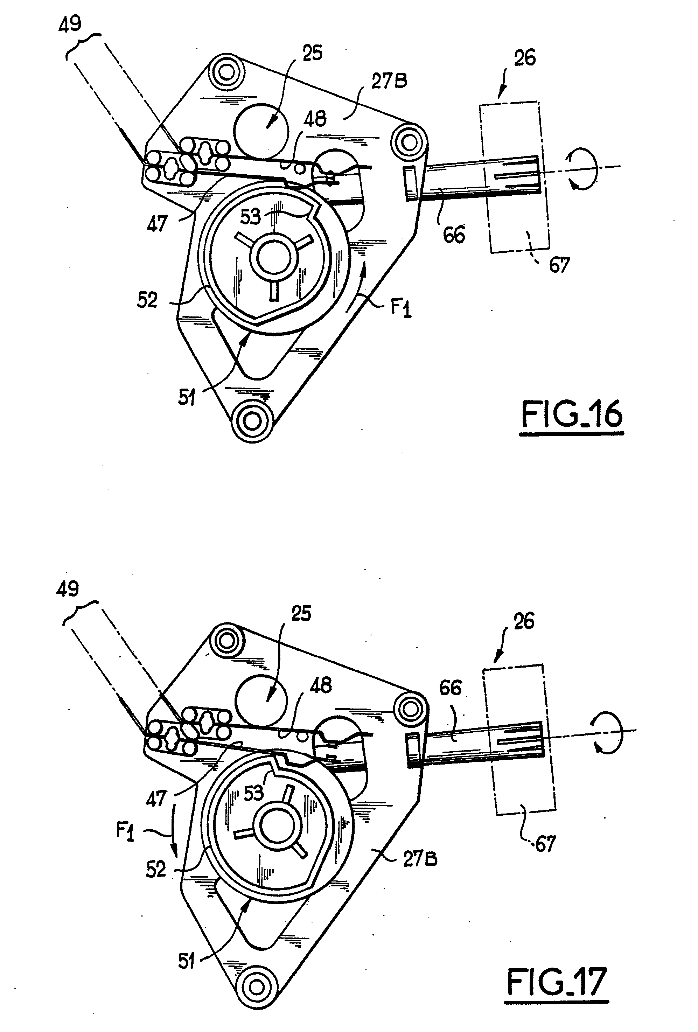

Un interrupteur d'arrêt automatique 25 (Figures 16, 17) décrit plus loin, est associé aux moyens d'inversion du mécanisme, pour couper l'alimentation du moteur 4 (Figures 2, 3) au bout d'un nombre prédéterminé d'inversions du sens de rotation de l'arbre de sortie 7. De préférence, l'interrupteur d'arrêt automatique 25 est également associé aux moyens de conjugaison des doigts de commande 22A, 22B, pour couper l'alimentation du moteur 4 dans la position des doigts de commande 22A, 22B, assurant la liberté de l'arbre de sortie 7, après le débrayage d'une couronne dentée telle que 11A, et avant l'embrayage de l'autre couronne 11B, comme on l'a déjà mentionné.

De préférence également, l'interrupteur 25 comporte des moyens d'affichage 26, décrits plus loin (Figures 1, 2, 4, 6, 7, 16) pour modifier à la demande, le nombre d'inversions du sens de rotation de l'arbre de sortie 7 précédant l'ouverture de l'interrupteur d'arrêt automatique 25.

Dans un mode de réalisation industrielle de l'invention, le mécanisme d'inversion 5 (Figures 5 à 12) comporte un boîtier 27, par exemple en matière plastique moulée, contenant le pignon d'entrée 6, l'arbre de sortie 7, les deux couronnes dentées 11A, 11B, et leur système d'embrayage à doigts mobiles de commande 22A, 22B.

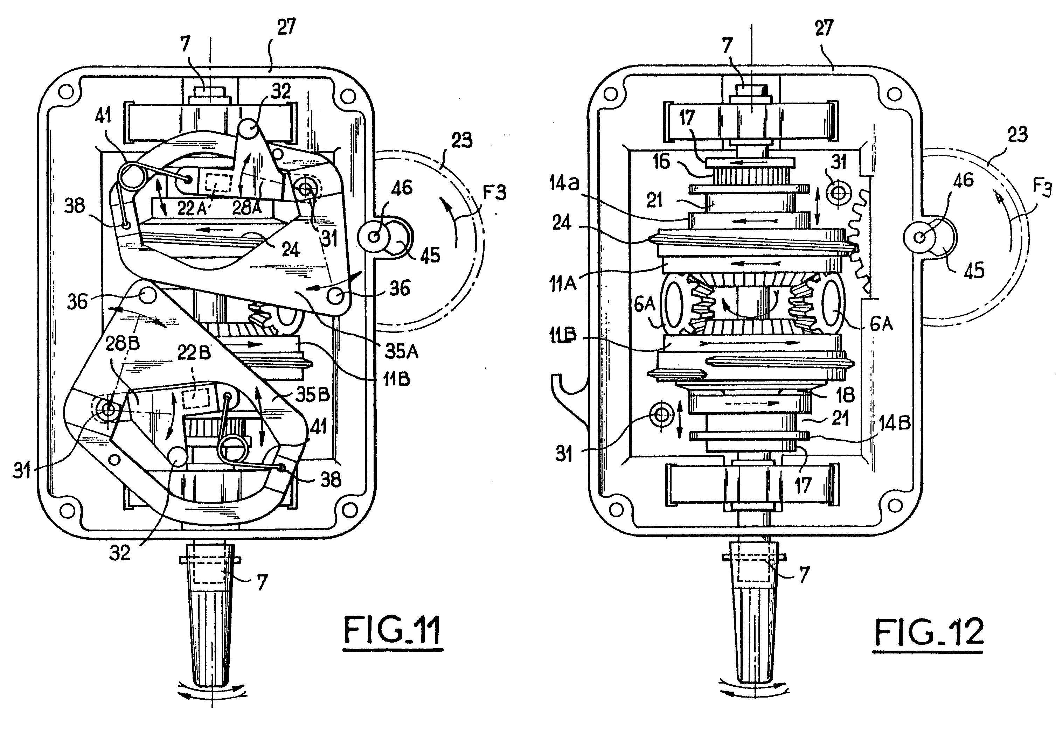

De préférence, chaque doigt de commande 22A, 22B est porté par un basculeur 28A, 28B (Figures 11, 13), asservi à une came d'inversion 37 décrite plus loin, entraînée en rotation par le pignon latéral de comptage 23.

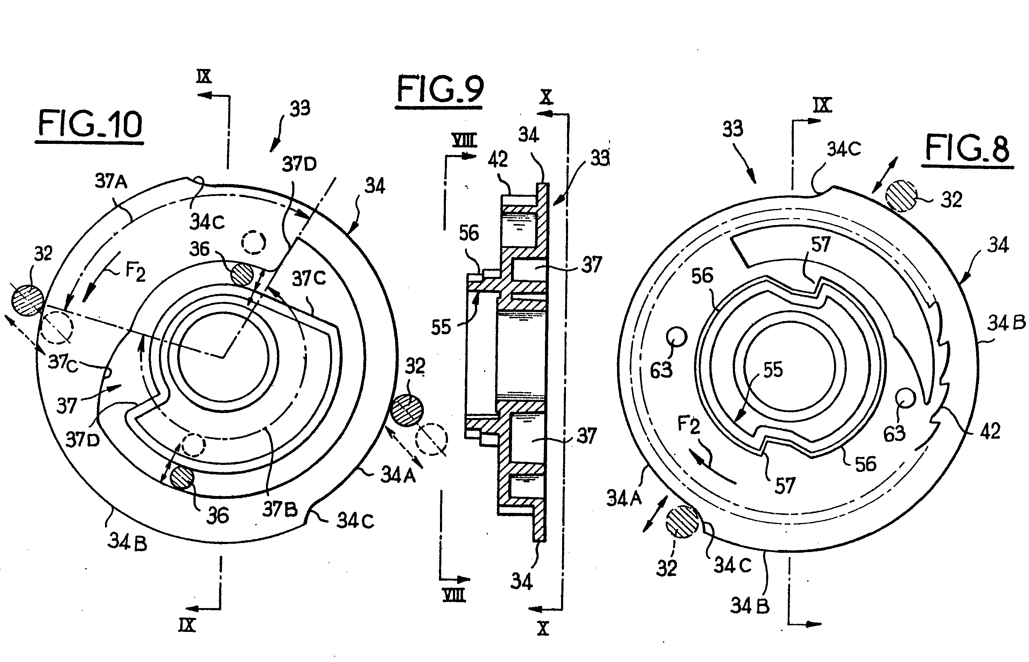

Chaque basculeur 28A, 28B, est monté rotativement dans le boîtier 27, suivant un axe 31 perpendiculaire à un couvercle amovible plan 27A du boîtier. Chaque basculeur 28A, 28B est commandé par la came d'inversion 37, réalisée de préférence dans une gorge en creux portée par une face d'une roue d'inversion 33 montée rotativement sur le couvercle 27A du boîtier (Figures 6, 10). Le couvercle 27A présente des ouvertures (non représentées) pour le passage d'au moins un téton d'actionnement 36 associé à chaque basculeur 28A, 28B, et coopérant avec la came d'inversion 37.

Ainsi qu'on l'a représenté schématiquement sur la Figure 10, les deux tétons d'actionnement 36 associés respectivement aux basculeurs 28A, 28B, sont sensiblement opposés suivant un diamètre de la came d'inversion 37.

D'une manière avantageuse (Figures 11, 13), chaque basculeur 28A, 28B, comporte un corps allongé contenu dans une cage oscillante sensiblement plane 35A, 35B, montée rotativement dans le boîtier 27, suivant le même axe 31 que le basculeur 28A, 28B, perpendiculairement au plan de la cage 35A, 35B. Chaque cage porte le téton d'actionnement 36 servant à commander le basculeur associé 28A, 28B, comme on l'expose plus loin.

Chaque basculeur 28A, 28B, porte un téton de blocage 32, qui traverse une ouverture 32A du couvercle 27A, pour coopérer avec une came de sécurité 34 réalisée en saillie radiale sur une bordure périphérique de la roue d'inversion 33 (Figures 6, 7, 10, 11, 13). Les deux tétons de blocage 32 sont sensiblement opposés l'un à l'autre sur un même diamètre de la came de sécurité 34.

Chaque cage oscillante 35A, 35B (Figures 11, 13) comporte des moyens d'appui pour limiter le débattement angulaire relatif du basculeur associé 28A, 28B, dans deux positions extrêmes opposées. Ces deux positions sont sensiblement symétriques de part et d'autre d'une ligne reliant l'axe d'oscillation commun 31 de la cage et du basculeur, à un autre point 38 de la cage, opposé à son axe 31, en regard d'une extrémité libre du corps allongé du basculeur tel que 28B.

L'extrémité libre du corps allongé de chaque basculeur 28A, 28b, est reliée au point 38 de la cage 35A, 35B correspondante, par un attelage élastique comprimé, tel qu'un ressort 41 à deux branches, analogue à un ressort de pince à linge. Le ressort 41 est sollicité en compression lorsque l'extrémité libre du corps du basculeur tend à se rapprocher du point 38 de la cage.

Par rapport à la cage 35A, 35B, la trajectoire de l'extrémité du ressort 41 liée au basculeur 28A, 28B, correspondant est un arc de cercle s'étendant de part et d'autre de la ligne reliant les points 31 à 38, et coupe sensiblement orthogonalement cette dernière. Ainsi, c'est dans une position moyenne, c'est-à-dire lorsque cette extrémité est située sur cette ligne que le ressort 41 est le plus comprimé.

La course angulaire de chaque cage 35A, 35B par rapport au boîtier 27 est légèrement plus importante que celle du basculeur correspondant 28A, 28B. Ainsi, pour chaque position stable (embrayage ou débrayage), la ligne reliant les positions 31 à 38 est située sensiblement au-delà de la position qu'occuperait, par rapport au boîtier 27, l'extrémité du ressort 41 liée au basculeur 28A, 28B, dans l'autre position.

Pour l'une ou l'autre des deux positions stables chaque basculeur 28A, 28B est en appui sur la cage respective 35A, 35B, grâce aux moyens d'appui. Ainsi, la poussée du ressort 41 est, en position stable, une force interne au système formé par la cage et le basculeur, et n'est pas transmise au téton 36, de sorte que ce dernier ne frotte pas en permanence sur la came d'inversion 37.

On assure ainsi la stabilité du basculeur dans chacune de ses positions extrêmes par rapport à la cage (Figure 11), et un mouvement brusque du basculeur entraîné d'une position à l'autre par la cage oscillante associée 35A, 35B (Figures 6 et 10 à 15). On facilite ainsi un mouvement rapide de coulissement de la bague d'embrayage correspondante, telle que 14B (Figure 15), asservie au doigt de commande 22B du basculeur 28B.

De préférence, la came d'inversion 37 (Figure 10) présente un profil qui permet de réserver un temps mort entre le mouvement de débrayage d'un basculeur et le mouvement réciproque d'embrayage de l'autre basculeur. A cet effet, la came d'inversion 37 présente un secteur 37A, de rayon relativement réduit, couvrant moins de 180° et correspondant à la position d'embrayage de l'un ou l'autre des tétons d'actionnement 36 associés aux basculeurs. La came d'inversion 37 présente un autre secteur 37B, qui couvre plus de 180°, et correspond à la position de débrayage des tétons 36.

De chaque côté de la gorge profilée constituant la came d'inversion en creux 37, une rampe inclinée 37C et un décrochement radial 37D relient l'une à l'autre deux parties sensiblement circulaires de chaque secteur 37A, 37B, de la came 37.

D'une manière analogue (Figure 10), la came de sécurité périphérique 34 présente un secteur de rayon relativement réduit 34A, couvrant sensiblement moins de 180°, et correspondant à une position d'embrayage de chacun des tétons de blocage 32 portés par les basculeurs 28a, 28B· (Figures 11 à 13). La came de sécurité 34 présente un autre secteur de plus grand rayon 34B, relié au secteur 34A, par des décrochements radiaux 34C, et couvrant plus de 180°. Le secteur 34B correspond à une position de débrayage des tétons de blocage 32.

Ainsi, à chaque tour de la roue d'inversion 33, une rampe inclinée 37C interne ou externe agit radialement sur l'un ou l'autre des tétons d'actionnement 36 d'une cage oscillante telle que 35A (Figure 11), pour solliciter le basculeur associé tel que 28A, par l'intermédiaire du ressort de liaison 41, et amener le basculeur à changer brusquement de position, avec le minimum de bruit et de fatigue pour le mécanisme.

Les profils de la came d'inversion 37 et de la came de sécurité 34 (Figure 10), et leur calage relatif, sont tels que chaque basculeur 28A, 28B, se trouve à tour de rôle bloqué en position de débrayage par son téton 32 en regard du secteur 34B de la came de sécurité, lorsque l'autre basculeur a son téton de blocage 32 en position d'embrayage sur le secteur 34A. En outre, les deux tétons de blocage 32, diamétralement opposés (Figure 10), sont maintenus simultanément pendant un certain temps en position de débrayage par le secteur 34B, couvrant plus de 180°.

On évite ainsi tout risque d'embrayage anormal et simultané des deux couronnes dentées 11A, 11B, même en cas de rupture de l'un des ressorts de liaison 41 (Figures 11 à 13), comme on l'expose plus loin. Egalement, on assure un temps mort de liberté de l'arbre de sortie 7 (Figures 1, 2, 3, 6, 14) à chaque inversion du sens de marche de cet arbre.

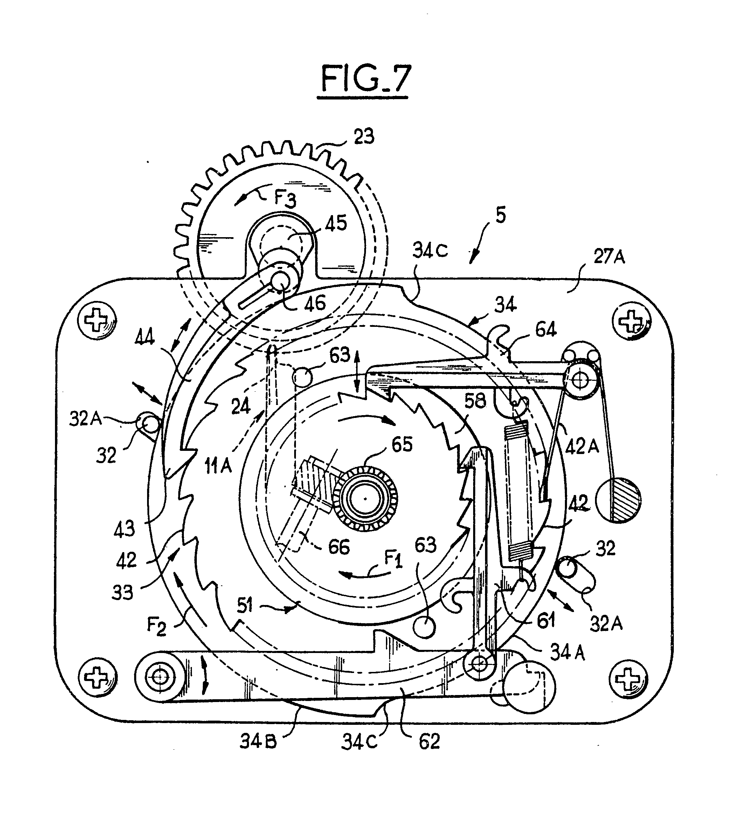

La roue d'inversion 33 (Figures 4 à 10) présente une bordure périphérique 42 qui coopère avec une dent d'extrémité d'un crochet articulé 44 à mouvement alternatif (Figure 7), entraîné par un arbre de comptage 45 sur lequel est claveté le pignon de comptage latéral 23 (Figure 5). Le crochet à mouvement alternatif 44 est articulé par une extrémité opposée à sa dent 43 sur un maneton 46 de l'arbre de comptage 45, pour entraîner en rotation la roue d'inversion 33, dent par dent, dans le sens de la flèche F2, à chaque aller et retour du crochet 44. Un ressort de retenue 42A, en prise avec la denture 42, empêche une rotation de la roue 33 à l'envers.

De préférence, l'articulation du crochet 44 sur le maneton 46 (Figure 7) présente un serrage élastique, pour communiquer au crochet 44 un couple dans le sens de rotation de l'arbre de comptage 45 (flèche F3) entraîné par le pignon latéral de comptage 23, à l'opposé du sens de rotation (F2) de la roue d'inversion 33. On assure ainsi, sans ressort de rappel, l'engagement de la dent 43 du crochet 44 sur une nouvelle dent de la roue d'inversion 33, à chaque mouvement de retour du crochet 44 vers l'arbre de comptage 45.

D'une manière avantageuse (Figures 16, 17), l'interrupteur d'arrêt automatique 25 comporte deux lames flexibles 47, 48, fixées au couvercle 27A du boîtier par l'intermédiaire du support extérieur 27B (Figures 4, 5). Chaque lame flexible 47, 48, présente une extrémité libre pouvant être mise en appui contre l'extrémité libre de l'autre lame, pour mettre en marche le moteur 4 (Figures 2, 3), par l'intermédiaire d'une ligne 49 reliée aux extrémités fixes des lames 47, 48. Par élasticité, les deux lames précitées tendent à s'écarter naturellement pour arrêter le moteur 4.

L'extrémité d'une première lame flexible, telle que la lame interne 47 (Figures 16, 17), est associée tangentiellement à une came d'arrêt automatique 51, coaxiale à la roue d'inversion 33 (Figures 4, 5, 6, 7). La came 51 est tenue par le support externe 27B, et montée folle sur la roue d'inversion 33, à l'opposé du couvercle 27A du boîtier. En périphérie, la came 51 présente une zone d'appui 52, associée à l'extrémité de la première lame 47, pour appliquer celle-ci contre l'extrémité de l'autre lame 48 (Figure 16). La zone d'appui 52 présente un décrochement radial 53 qui aboutit à un évidement de la came 51, pour permettre à l'extrémité de la première lame 47 de s'écarter par élasticité de l'extrémité de l'autre lame 48, en position d'ouverture de l'interrupteur 25 (Figure 17).

Sur sa face en regard de la came d'arrêt automatique 51, la roue d'inversion 33 (Figures 8, 9) porte une came auxiliaire 55, de profil analogue à celui de la came d'arrêt 51, et comportant comme celle-ci, une zone d'appui 56 pour appliquer la première lame flexible 47 contre l'autre lame 48. De même, la zone d'appui 56 de la came auxiliaire 55 comporte au moins un décrochement radial 57, aboutissant à un évidement de la came, pour permettre à la première lame 47 de s'écarter librement de l'autre lame 48.

Le montage co-axial de la came d'arrêt automatique 51 et de la came auxiliaire 55 permet l'écartement précité de la première lame 47, seulement lorsque les décrochements 53, 57, des deux cames sont en coïncidence, en regard de la partie associée de la lame flexible 47 (Figure 17), pour ouvrir l'interrupteur 15 et arrêter le moteur 4 (Figures 1 à 3).

Par construction (Figure 8), la came auxiliaire 55 de la roue d'inversion 33 est calée sur cette dernière de telle manière que le décrochement 57 de la came auxiliaire atteigne la partie correspondante de la lame flexible interne 47 (Figure 17), seulement après que la came d'inversion en creux 37 de la roue 33 a écarté simultanément les deux tétons 36 associés aux basculeurs 28A, 28B (Figure 11), pour mettre en position de débrayage les deux couronnes dentées 11A, 11B (Figure 14). Dans cette position prédéterminée du mécanisme d'inversion, l'arbre de sortie 7 (Figures 1, 2, 3, 6, 14) est libre par rapport au pignon d'entrée 4. Comme on l'a déjà mentionné, une telle liberté de l'arbre de sortie 7 se produit à chaque inversion de son sens de rotation.

Ainsi qu'on l'a représenté sur la Figure 7, la came d'arrêt automatique 51 comporte une denture périphérique d'avance 58, associée à un crochet d'avance 61 articulé sur un levier oscillant 62. Celui-ci est commandé par deux bossages périphériques 63 diamétralement opposés de la roue d'inversion 33. A chaque passage d'un bossage 63, en regard du levier oscillant 62, la came 51 se trouve ainsi entraînée dans le sens de la flèche F1, d'un angle correspondant à une dent de sa denture d'avance 58.

Le crochet d'avance 61 est associé à un crochet de retenue analogue 64, articulé sur le couvercle 27A du boîtier du mécanisme, pour obliger la came d'arrêt 51 à tourner constamment dans le même sens que la roue d'inversion 33, comme indiqué sur la Figure 7 (flèches F1, F2).

Les moyens d'affichage 26 (Figures 1 à 4) permettent de modifier à la demande le nombre d'inversions du sens de rotation de l'arbre de sortie 7, précédant l'ouverture de l'interrupteur 25 (Figure 27) et l'arrêt du moteur 4 de la machine. A cet effet, les moyens d'affichage 26 comportent, par exemple, un couple de pignons 65 actionnés par un arbre tournant 66 relié à un bouton externe d'affichage 67 (Figures 1 à 4, 6, 7), pour faire tourner à la demande, la came d'arrêt automatique 51, à la mise en marche du moteur.

Comme on l'expose plus loin, en modifiant ainsi la position angulaire initiale de la came d'arrêt automatique 51, on modifie la longeur utile de la zone d'appui 52 de la came (Figures 16 et 17). La longeur utile précitée se situe entre l'extrémité de la lame flexible 47 au contact de la zone 52, et la position de départ du décrochement radial 53, permettant à la lame interne 47 de s'écarter de l'autre lame 48 de l'interrupteur 25.

On va maintenant exposer le fonctionnement et les avantages du mécanisme d'inversion et de la machine à laver que l'on vient de décrire en référence aux Figures 1 à 17.

On suppose que la machine à laver 1 se trouve initialement à l'arrêt, prête à fonctionner, l'interrupteur 25 ayant sa lame interne 47 écartée par élasticité de l'autre lame 48 (Figure 17). Cet écartement de la lame 47 est permis par une position angulaire d'arrêt de la came d'arrêt automatique 51, mettant le décrochement radial 53 de la zone d'appui 52 de la came en regard de la partie associée de la lame interne 47.

Pour mettre en marche la machine 1, on agit sur le bouton d'affichage 67 (Figures 1 à 4), pour faire tourner la came 51 dans le sens de la flèche F1 (Figures 7, 16, 17). On amène ainsi le décrochement radial 53 de la came dans une nouvelle position (Figure 16), angulairement écartée de la partie associée de la lame 47. La lame 47 se trouve appliquée contre l'autre lame 48 de l'interrupteur 25 qui se ferme, provoquant la mise en marche du moteur 4. Celui-ci entraîne en rotation les couronnes dentées 11A, 11B, en prise avec le pignon d'entrée 6.

Comme on l'a déjà mentionné, les couronnes d'entrée 11A, 11B, montées folles sur l'arbre de sortie 7, sont débrayées par rapport à cet arbre en position d'arrêt de la machine 1. Dans cette position, les tétons 32 sont en regard de la zone 34B du plus grand rayon de la came 34 (Figure 10). Ceci facilite la mise en marche du moteur 1, sans aucune surintensité de démarrage. Les couronnes 11A, 11B, tournent d'abord à vide, la couronne 11A entraînant par son filetage périphérique 24 le pignon latéral de comptage 23 (Figures 4, 7, 12).

Actionné alternativement par le maneton 46 de l'arbre de comptage 45 (Figure 7), le crochet articulé 44 agit sur la denture 42 de la roue d'inversion 33, pour la faire avancer dent par dent, dans le sens de la flèche F2. La roue d'inversion 33 tourne ainsi dans le même sens (F1) que la came d'arrêt automatique 51, mais à l'inverse du sens de rotation (F3) du pignon de comptage 23. Le ressort de retenue 42A, en prise avec la denture 42 de la roue 33, empêche celle-ci de tourner à l'envers.

La rotation de la roue d'inversion 33 (Figures 7 à 10) fait tourner la came d'inversion en creux 37, réalisée dans une gorge profilée de la face de la roue 33 en appui sur le couvercle 27A (Figures 4 à 6). Au bout d'un certain temps, la came d'inversion en creux 37 agit sur le téton d'actionnement 36 de l'une des deux cages oscillantes 35A, 35B (Figures 11, 13), pour amener la cage en position d'embrayage. La cage oscillante, telle que 35B, prend alors autour de son axe 31 un mouvement de rotation tel que la ligne reliant les points 31 et 38 se rapproche de l'extrémité du ressort 41 liée au basculeur 28B, en comprimant le ressort 41 et en poussant le basculeur 28B dans le sens opposé à celui du mouvement prévu. Le basculeur 28B et la bague 14B restent alors immobiles par appui de cette dernière sur la douille 17 formant butée.

Dès que la ligne reliant les points 31 à 38 franchit l'extrémité du ressort 41 liée au basculeur 28B, l'action du ressort 41, comprimé au maximum, change de sens et le basculeur 28B est brusquement poussé vers sa position d'embrayage dans un mouvement de sens inverse à celui de la cage 35B. Par construction, son téton de blocage 32 se trouve déjà en regard de la zone 34A de moindre rayon de la came de sécurité périphérique 34, autorisant ce mouvement d'embrayage brusque du basculeur 28B.

En passant ainsi brusquement en position d'embrayage, le basculeur 28B agit par son doigt de commande 22B sur la bague coulissante 14B (Figure 15), pour solidariser rapidement la couronne dentée 11B et l'arbre de sortie 7, qui se met à tourner dans un sens.

Sur la Figure 11, on a ainsi représenté la cage 35A (à gauche) et le basculeur associé 28A, en position de débrayage, tandis que l'autre cage 35B et son basculeur 28B sont représentés en position d'embrayage. Au contraire, sur la Figure 12, la bague coulissante 14A (à gauche) est en position d'embrayage, tandis que l'autre bague 14B est en position de débrayage.

Entraînée par le pignon latéral de comptage 23 (Figure 7), la roue d'inversion 33 met un certain temps à tourner d'un angle inférieur à 180°, correspondant à la longeur du secteur d'embrayage 37A de la came d'inversion 37 (Figure 10). Le téton d'actionnement 36, associé au basculeur embrayé 28B, est alors atteint par la rampe inclinée interne 37C de la came 37 qui agit radialement sur le téton 36. Celui-ci déplace la cage oscillante 35B, sollicitant le basculeur embrayé 28B par l'intermédiaire du ressort 41, pour faire revenir brusquement le basculeur 28B en position de débrayage.

Les deux couronnes dentées 11A, 11B, se trouvent ainsi débrayées pendant un certain temps mort, pendant lequel le pignon d'entrée 6 du moteur 4 continue à tourner, entraînant à vide les deux couronnes 11A, 11B.

Cependant, l'arbre de sortie 7, solidaire de l'organe tournant 3 de la machine à laver 1 (Figure 1), continue à tourner librement par inertie, en ralentissant rapidement sous l'effet des frottements du linge (non représenté), en cours de lavage dans la cuve 2 de la machine.

L'arbre de sortie 7 se trouve ainsi arrêté complétement, lorsque le téton d'actionnement 36 associé à l'autre basculeur 28A (Figures 6, 11) est atteint à son tour par la rampe inclinée externe 37C de la came 37. Le basculeur 28A passe alors à son tour brusquement en position d'embrayage, tandis que l'autre basculeur 28B reste bloqué en position de débrayage, par son doigt 32 en regard du secteur de plus grand rayon 34B de la came de sécurité 34 (Figure 10).

Ainsi, à chaque tour de la roue d'inversion 33 (Figures 6 à 10), les basculeurs 28A, 28B, se trouvent à tour de rôle en position d'embrayage, solidarisant tantôt la couronne dentée 11A, tantôt la couronne dentée 11B, avec l'arbre de sortie 7. Ce dernier tourne alternativement dans un sens et dans l'autre, assurant l'inversion de marche de l'organe tournant 3 de la machine à laver 1 (Figure 1).

En outre, à chaque inversion du sens de rotation de l'arbre de sortie 7, les deux basculeurs 28A, 28B, se trouvent simultanément en position de débrayage, pendant un certain temps mort. Ceci assure la liberté de l'arbre de sortie 7, pour en permettre le ralentissement et l'arrêt par frottement, avant l'inversion de son sens de rotation.

Les mouvements précités d'embrayage et de débrayage de chaque couronne dentée 11A, 11B, sur l'arbre de sortie 7, et les inversions du sens de rotation de ce dernier sont facilités, et amortis favorablement, par l'accouplement élastique 8 (Figure 1), reliant l'arbre de sortie 7 à l'organe tournant 3 de la machine.

A chaque passage d'un bossage périphérique 63 de la roue d'inversion 33 (Figure 7), en regard du levier d'avance 62, celui-ci actionne le crochet articulé 61, pour faire avancer la came d'arrêt automatique 51, d'un angle correspondant à une dent de sa denture 58. Ceci assure un déplacement angulaire progressif du décrochement radial 53 de la came d'arrêt 51 (Figures 16, 17), jusqu'à amener le décrochement radial 53 en regard de la partie associée de la lame interne 47 de l'interrupteur 25.

En même temps, la came auxiliaire 55 portée par la roue d'inversion 33 tourne d'un demi-tour à chaque déplacement graduel d'avance de la came d'arrêt automatique 51 (Figures 5, 8, 16, 17). Au bout d'un certain nombre d'inversions du sens de rotation de l'arbre de sortie 7, un déchrochement radial 57 de la came auxiliaire 55 vient ainsi en coïncidence avec le décrochement radial 53 de la came d'arrêt automatique 51, en regard de la partie associée de la lame intérieure 47 de l'interrupteur 25 (Figure 17). La lame 47 s'écarte alors par élasticité de l'autre lame 48, provoquant l'arrêt automatique du moteur 4 et de l'organe tournant 3 de la machine à laver (Figure 1).

Par construction, on choisit d'une manière appropriée le rapport de réduction de la roue d'inversion 33 (Figure 7), entraînée par le dispositif de comptage. Celui-ci est constitué par le filetage périphérique 24 de la couronne dentée 11A, en prise sur le pignon latéral 23, dont l'arbre 45 porte le maneton 46. Ce dernier actionne alternativement le crochet articulé 44, agissant dent par dent, sur la roue d'inversion 33, dans le sens de la flèche F2.

On s'arrange pour assurer, par exemple toutes les trente secondes, une inversion automatique du sens de rotation de l'arbre de sortie 7 entraînant l'organe tournant 3 de la machine à laver 1 (Figure 1).

De même, on prévoit sur le bouton d'affichage 67 du système de comptage 26 de la machine (Figures 1, 2, 16, 17), des graduations appropriées, en rapport avec les dents périphériques 58 de la came d'arrêt automatique 51 (Figures 4 à 7). Les graduations précitées sont, par exemple, associées à un repère 67A, fixé au carter de la machine 1, en regard du bouton d'affichage 67, pour permettre de modifier à la demande la longeur utile de la zone d'appui 52 de la came d'arrêt 51. Cette longueur utile sépare la position angulaire de départ de son décrochement radial 53, et la position correspondante de la partie associée de la lame intérieure 47 de l'interrupteur 25.

On peut prévoir un affichage variable du temps de fonctionnement de la machine à laver, correspondant par exemple à un nombre quelconque d'inversions, entre une et trente. Ceci permet un fonctionnement automatique plus ou moins prolongé de la machine, entre trente secondes et quinze minutes.

La durée réduite de fonctionnement de la machine entre chaque inversion du sens de rotation de l'organe tournant 3, évite l'enroulement du linge (non représenté), et assure l'efficacité désirée du lavage, sans risque de blocage du mécanisme et du moteur 4.

La came de sécurité 34 de la roue d'inversion 33 (Figures 8 à 10) empêche un embrayage simultané des deux couronnes dentées 11A, 11B, (Figures 6, 14), même en cas d'une rupture accidentelle d'un ressort de liaison 41 (Figures 11, 13). On évite ainsi un risque de blocage du mécanisme et du moteur 4.

Le secteur 34B de plus grand rayon de la came de sécurité 34, couvrant plus de 180°, associé au secteur de débrayage 37B de la came d'inversion 37 (Figure 10), oblige en outre les tétons de blocage 32 des basculeurs 28A, 28B, à se trouver simultanément en position de débrayage à deux reprises à chaque tour de la roue d'inversion 33. Le temps mort de liberté ainsi assuré à l'arbre de sortie 7 permet le ralentissement et l'arrêt de celui-ci, sous l'effet du frottement du linge dans la cuve 2 de la machine, et assure le démarrage à vide du moteur 4, évitant toute surcharge de celui-ci.

Les mouvements alternés et conjugués des basculeurs 28A, 28B, et de leurs cages oscillantes 35A, 35B (Figures 11, 13) sont assurés d'une manière brusque et franche par les ressorts de liaison 41. Grâce à la longueur de la zone débrayage obligatoire 34B de la came 34, une rupture accidentelle d'un ressort 41 est sans conséquence grave, et ne risque pas de provoquer un blocage et une avarie du mécanisme d'inversion 5 de la machine.

L'absence de tout organe électrique, en dehors du moteur 4 et de l'interrupteur 25, permet d'assurer économiquement une protection efficace de la machine, à l'égard des dangers éventuels des courants électriques en ambiance humide.

D'une manière avantageuse, la plupart des organes du système d'inversion purement mécanique conforme à l'invention, peuvent être fabriqués économiquement avec précision en matière plastique moulée. On peut réaliser ainsi une production économique en série de la machine et de son mécanisme d'inversion, et obtenir sans graissage un fonctionnement doux et silencieux du mécanisme, et une endurance prolongée.

Bien entendu, l'invention n'est pas limitée au mode de réalisation que l'on a décrit à titre d'exemple, et on peut y apporter diverses variantes sans sortir du domaine de l'invention.

## Revendications

1. Mécanisme d'inversion de marche pour une machine à laver, dans lequel un pignon d'entrée (6) est constamment en prise avec deux couronnes (11A, 11B) montées folles sur un arbre de sortie (7), chaque couronne (11A, 11B) coopérant au moyen de saillies (12) avec une bague coulissante d'embrayage respective (14A, 14B) solidaire en rotation de l'arbre de sortie (7), chaque bague coulissante (14A, 14B) étant mobile entre une position d'embrayage dans laquelle elle solidarise la couronne associée (11A, 11B) avec l'arbre de sortie (7) et une position de débrayage dans laquelle elle est écartée de cette couronne (11A, 11B), chaque bague coulissante (14A, 14B) étant commandée par une came d'inversion (37) par l'intermédiaire de moyens de commande, caractérisé en ce qu'il comprend, pour chaque bague coulissante (14A, 14B), un basculeur (28A, 28B) monté en rotation à l'une de ses extrémités sur un axe (31) porté par le boîtier (27), ce basculeur (28A, 28B) comportant aussi un doigt de commande (22A, 22B) engagé dans une gorge périphérique de la bague coulissante (14A, 14B) correspondante, et en ce que chaque basculeur (28A, 28B) est contenu dans une cage oscillante (35A, 35B) montée en rotation sur le même axe (31) que le basculeur (28A, 28B) mais indépendamment de ce dernier, l'axe (31) étant perpendiculaire au plan de la cage (35A, 35B), celle-ci portant un téton d'actionnement (36) coopérant avec la came d'inversion (37) constituée par une gorge profilée d'une roue d'inversion (33), le basculeur (28A, 28B) étant relié à la cage (35A, 35B) par un ressort de compression (41).

2. Mécanisme conforme à la revendication 1, caractérisé en ce que chaque cage oscillante (35A, 35B) comporte des moyens pour limiter le débattement angulaire relatif du basculeur associé (28A, 28B), dans deux positions extrêmes opposées, sensiblement symétriques de part et d'autre d'une ligne reliant l'axe d'oscillation commun (31) de la cage (35A, 35B) et du basculeur (28A, 28B) à un autre point (38) de la cage, opposé à son axe (31), en regard d'une extrémité libre du basculeur, la seconde extrémité du ressort (41) étant attachée à la cage (35A, 35B) au point (38) précité.

3. Mécanisme conforme à l'une des revendications 1 ou 2, caractérisé en ce que chaque ressort (41) est du type de ceux utilisés dans les pinces à linge.

4. Mécanisme conforme à l'une des revendications 1 à 3, caractérisé en ce que la roue d'inversion (33) porte une came de sécurité (34) en saillie radiale sur une bordure périphérique de la roue et coopérant avec un téton de blocage (32) de chaque basculeur (28A, 28B), le profil de la came de sécurité (34) et son calage par rapport à la came d'inversion (37) étant tels que chaque basculeur (28A, 28B) se trouve bloqué à tour de rôle en position de débrayage par son téton (32), lorsque l'autre basculeur est en position d'embrayage, et que les deux tétons de blocage (32) des basculeurs (28A, 28B) sont maintenus simultanément en position de débrayage pendant un certain temps par la came de sécurité (34), pour assurer un temps mort de liberté de l'arbre de sortie (7), à chaque inversion du sens de marche de cet arbre.

5. Mécanisme d'inversion de marche conforme à l'une des revendications 1 à 4, destiné à être adapté à une machine à laver électrique, la roue d'inversion (33) comprenant des moyens pour réserver un temps de liberté de l'arbre de sortie à chaque inversion du sens de rotation de celui-ci, caractérisé en ce qu'il comprend un interrupteur d'arrêt automatique (25) associé, d'une part, à une came d'arrêt automatique (51) et, d'autre part, à la roue d'inversion (33) pour ne permettre la coupure de l'alimentation du moteur (4) que dans la position du mécanisme où l'arbre de sortie est libre au cours d'une inversion du sens de rotation de celui-ci.

6. Mécanisme conforme à la revendication 5, caractérisé en ce que la roue d'inversion (33), sur une face en regard de la came d'arrêt automatique (51), porte une came auxiliaire (55) de profil analogue à celui de la came d'arrêt (51), et comportant, comme celle-ci, une zone d'appui (56), pour appliquer une première lame flexible (47) contre l'autre lame (48) de l'interrupteur (25), et un décrochement radial (57) aboutissant à un évidement permettant à la première lame (47) de s'écarter librement de l'autre lame (48), le montage co-axial de la came d'arrêt automatique (51) et de la came auxiliaire (55) permettant l'écartement précité de la première lame flexible (47) seulement lorsque les deux décrochements (53, 57) des deux cames (51, 55), sont en coïncidence en regard de la partie associée de la lame (47) précitée, pour arrêter le moteur (4) dans la position prédéterminée du mécanisme (5), prévue pour assurer la liberté de l'arbre de sortie 7 à chaque inversion du sens de rotation de celui-ci.

7. Machine à laver équipée d'un mécanisme d'inversion conforme à l'une des revendications 1 à 6, caractérisée en ce que le mécanisme d'inversion (5) est interposé entre un moteur d'entraînement (4) et une turbine de brassage (3).

**Patentansprüche**

1. Drehrichtungsumsteuermechanismus für eine Waschmaschine, bei dem ein Eingangsritzel (6) ständig in Eingriff mit zwei auf einer Aus-gangswelle (7) frei drehbar gelagerten Zahnkränzen (11A, 11B) ist, wobei jeder Zahnkranz (11A, 11B) über Vorsprünge (12) mit einem verschiebbaren Kuppiungsring (14A, 14B) zusammenwirkt, der drehfest mit der Aus-gangswelle (7) verbunden ist, wobei jeder verschiebbare Ring (14A, 14B) zwischen einer Einkupplungsstellung, in welcher er den zugeordneten Zahnkranz (11A, 11B) fest mit der Ausgangswelle (7) verbindet, und einer Auskupplungsstellung, in welcher er von diesem Zahnkranz (11A, 11B) entfernt ist, bewegbar ist und wobei jeder verschiebbare Ring (14A, 14B) durch einen Umsteuernocken (37) über Steuermittel gesteuert ist, dadurch gekennzeichnet, daß für jeden verschiebbaren Ring (14A, 14B) ein Schwenkelement (28A, 28B) vorhanden ist, das an einem seiner Enden auf einer vom Gehäuse (27) getragenen Achse (31) drehbar gelagert ist, daß das Schwenkelement (28A, 28B) einen Steuerfinger (22A, 22B) aufweist, der mit einer Umfangsnut des entsprechenden verschiebbaren Rings (14A, 14B) in Eingriff steht und daß jedes Schwenkelement (28A, 28B) in einem Schwingkäfig (35A, 35B) enthalten ist, der um die gleiche Achse (31) wie das Schwenkelement (28A, 28B) drehbar, jedoch unabhängig von diesem gelagert ist, wobei die Achse (31) senkrecht zur Ebene des Käfigs (35A, 35B) verläuft, der einen Betätigungszapfen (36) trägt, der mit dem Umsteuernocken (37) zusammenwirkt, welcher durch eine Profilnut einer Seite eines Umsteuerrades (33) gebildet ist, wobei das Schwenkelement (28A, 28B) mittels einer Druckfeder (41) mit dem Käfig (35A, 35B) verbunden ist.

2. Mechanismus nach Anspruch 1, dadurch gekennzeichnet, daß jeder Schwingkäfig (35A, 35B) Mittel zur Begrenzung des relativen Schwenkwinkels des zugeordneten Schwenkelements (28A, 28B) in zwei entgegengesetzten Endstellungen aufweist, die im wesentlichen symmetrisch auf beiden Seiten einer Linie liegen, welche die gemeinsame Schwenkachse (31) des Käfigs (35A, 35B) und des Schwenkelements (28A, 28B) mit einem seiner Achse (31) gegenüberliegenden anderen Punkt (38) des Käfigs bei einem freien Ende des Schwenkelements verbindet, wobei das zweite Ende der Feder (41) an dem Käfig (35A, 35B) an dem genannten Punkt (38) befestigt ist.

3. Mechanismus nach Anspruch 1 oder 2, dadurch gekennzeichnet, daß jede Feder (41) von solcher Art ist, wie sie in Wäscheklammern verwendet werden.

4. Mechanismus nach einem der Ansprüche 1 bis 3, dadurch gekennzeichnet, daß das Umsteuerrad (33) einen Sicherheitsnocken (34) trägt, der radial an einem Umfangsrand des Rades vorsteht und mit einem Blockierzapfen (32) jedes Schwenkelements (28A, 28B) zusammenwirkt, wobei das Profil des Sicherheitsnockens (34) und dessen Blockierung bezüglich des Umsteuernockens (37) derart sind, daß jedes Schwenkelement (28A, 28B) jeweils eines nach dem anderen in seiner Auskupplungsstellung durch den Zapfen (32) blockiert ist, wenn das andere Schwenkelement sich in der Einkupplungsstellung befindet, und daß die zwei Blockierzapfen (32) der Schwenkelemente (28A, 28B) während einer bestimmten Zeitspanne gleichzeitig durch einen Sicherheitsnocken (34) in Auskupplungsstellung gehalten werden, um eine Totzeit zu gewährleisten, in welcher die Ausgangswelle (7) frei ist, und zwar bei jeder Umsteuerung des Arbeitssinnes dieser Welle.

5. Umsteuermechanismus nach einem der Ansprüche 1 bis 4, der bestimmt ist zu Anwendung bei einer elektrischen Waschmaschine, wobei das Umsteuerrad (33) Mittel enthält, die der Ausgangswelle bei jeder Umsteuerung ihres Drehsinnes eine Zeitspanne einräumen, in der sie frei ist, dadurch gekennzeichnet, daß er einen Unterbrecher (25) zum automatischen Anhalten enthält, der zum einen Nocken (51) zum automatischen Anhalten und zum anderen dem Umsteuerrad (33) zugeordnet ist, damit die Unterbrechung der Versorgung des Motors (4) nur in derjenigen Stellung des Mechanismus möglich ist, wo die Ausgangswelle während einer Umsteuerung ihres Drehsinnes frei ist.

6. Mechanismus nach Anspruch 5, dadurch gekennzeichnet, daß das Umsteuerrad (33) auf einer Oberfläche, welche dem Nocken (51) zum automatischen Anhalten gegenüberliegt, einen Hilfsnocken (55) aufweist, dessen Profil analog demjenigen des Nockens (51) zum Anhalten ist und wie dieser eine Abstützzone (56) zum Anlegen eines ersten flexiblen Streifens (47) gegen den anderen Streifen (48) des Unterbrechers (25) und eine radiale Stufe (57) enthält, die in einer Ausnehmung mündet, welche dem ersten Streifen (47) gestattet, sich frei von dem anderen Streifen (48) zu entfernen, wobei die koaxiale Lagerung des Nockens (51) zum automatischen Anhalten und des Hilfsnockens (55) die erwähnte Entfernung des ersten flexiblen Streifens (47) nur dann gestattet, wenn die zwei Stufen (53, 57) der beiden Nocken (51, 55) gegenüber dem zugeordneten Teil des genannten Streifens (47) zusammenfallen, zum Anhalten des Motors (4) in der vorbestimmten Stellung des Mechanismus (5), welche vorgesehen ist, um bei jeder Umsteuerung des Richtungssinnes der Ausgangswelle (7) zu gewährleisten, daß diese frei ist.

7. Waschmaschine mit einem Drehrichtungsumsteuermechanismus nach einem der Ansprüche 1 bis 6, dadurch gekennzeichnet, daß der Umsteuermechanismus (5) zwischen einen Antriebsmotor (4) und eine Rührturbine (3) eingefügt ist.

**Claims**

1. A motion-reversing mechanism for a washing machine in which an input gearwheel (6) constantly engages two rims (11A, 11B) loosely mounted on an output shaft (7), each rim (11A, 11B) having projections (12) co-operating with a respective sliding coupling ring (14A, 14B) rotating integrally with the output shaft (7), each sliding ring (14A, 14B) being movable between a coupling position in which it secures the associated rim (11A, 11B) to the output shaft (7) and an uncoupling position in which it is moved apart from the rim (11A, 11B), each sliding ring (14A, 14B) being actuated by a reversing cam (37) via control means, the mechanism being characterised in that, for each sliding ring (14A, 14B), it comprises a rocking lever (28A, 28B) one end of which is rotatably mounted about a shaft (31) borne by a casing (27), the rocking lever also comprising a control lug (22A, 22B) engaging in a peripheral groove in the corresponding sliding ring (14A, 14B) and each rocking lever (28A, 28B) is disposed in an oscillating cage (35A, 35B) rotatably mounted about the same axis (31) as the rocking lever (28A, 28B) but independently thereof, the axis (31) being perpendicular to the plane of the cage (35A, 35B), which bears an actuating stud (36) co-operating with the reversing cam (37), which comprises a cross-sectional groove in a reversing wheel (33), the rocking lever (28A, 28B) being connected to the cage (35A, 35B) by a compression spring (41).

2. A mechanism according to claim 1, characterised in that each oscillating cage (35A, 35B) comprises means for limiting the relative angular motion of the associated rocking lever (28A, 28B) in two opposite end positions substantially symmetrical on either side of a line connecting the axis of common oscillation (31) of the cage (35A, 35B) and rocking lever (28A, 28B) to another point (38) in the cage remote from its axis (31) and opposite a free end of the rocking lever, the second end of the spring (41) being attached to the cage (35A, 35B) at the aforementioned point (38).

3. A mechanism according to claim 1 or 2, characterised in that each spring (41) is of the kind used in clothes-pegs.

4. A mechanism according to any of claims 1 to 3, characterised in that the reversing wheel (33) bears a safety cam (34) radially projecting from a peripheral edge of the wheel and co-operating with a stud (32) for locking each rocking lever (28A, 28B), the safety cam (34) having a cross-section and being keyed relative to the reversing cam (37) in such a manner that each rocking lever (28A, 28B) is sequentially locked in the uncoupling position by its stud (32) when the other rocking lever is in the coupling position, and the two studs (32) locking the rocking levers (28A, 28B) are held simultaneously in the uncoupling position for a certain time by the safety cam (34) so that the output shaft (7) has an idle or free time during each reversal of its motion.

5. A motion-reversing mechanism according to any of claims 1 to 4, for use in an electric washing machine, the reversing wheel (33) comprising means for ensuring that the output shaft has a free time during each reversal of its motion, the mechanism being characterised in that it comprises an automatic stop switch (25) associated with an automatic stop cam (51) and with the reversing wheel (33) so as not to cut off the power supply to the motor (4) except when the mechanism is in the position where the output shaft is free during a reversal of its motion.

6. A mechanism according to claim 5, characterised in that the reversing wheel (33), on one surface facing the automatic stop cam (51), bears an auxiliary cam (55) having a cross-section similar to that of the stop cam (51) and, like the stop cam, comprising a bearing region (56) for pressing a first flexible strip (47) against the other strip (48) of the switch (25), and a radial set-back part (57) terminating in a recess enabling the first strip (47) to move freely away from the other strip (48), the automatic stop cam (51) being mounted coaxially with the auxiliary cam (55) so that the first flexible strip (47) can move away in the aforementioned manner only when the two set-back parts (53, 57) of the two cams (51, 55) coincide facing the associated part of the aforementioned strip (47) so as to stop the motor (4) in the predetermined position of the mechanism (5) which is provided to ensure that the output shaft (7) is free during each reversal of its rotation.

7. A washing machine equipped with a reversing mechanism according to any of claims 1 to 6, characterised in that the reversing mechanism (5) is interposed between a driving motor (4) and a mixing turbine (3).

FIG_1

FIG. 2

FIG. 3

2

FIG_5

FIG_4

FIG.6

0 004 490

# FIG.7

FIG.10

FIG.9

FIG.8

33

37D

37A

34C

32

F₂

36

34

37C

37C

37C

37

37D

36

37B

34C

34A

34B

34C

34B

32

X

VIII

42

34

33

56

55

37

37

VIII

34

X

IX

33

34C

32

34

57

56

63

55

34B

63

F₂

56

57

34A

32

34C

34B

IX

IX

6

0004 490

**FIG.15**

**FIG.14**

**FIG.13**

FIG.16

FIG.17